# EUROPEAN PATENT APPLICATION

(11) **EP 4 372 660 A1**
(43) Date of publication of application: **22.05.2024**
(21) Application number: 22207588.9
(22) Date of filing: 15.11.2022
(51) Int. Cl.: G06Q 40/12, G06Q 10/1053, H04L 9/32

(54) **VERIFYING DATA**

(71) Applicant: Sage Global Services Limited, Newcastle upon Tyne NE28 9EJ (GB)
(72) Inventor: LATIMER, Christopher Ian, Newcastle upon Tyne, Tyne and Wear NE28 9EJ (GB)
(74) Representative: Definition IP Limited

(57) **Abstract**

Disclosed herein is a system for verifying data associated with a party requesting a product or service, said system comprising a verification function, a ledger database and a network directory comprising a plurality of network identity data records associated with a plurality of known parties, said verification function configured to: receive from an external computer system a data verification request message comprising an identifier identifying a requesting party and a data assertion indicative of data asserted to be accurate by the requesting party; determine a network identity associated with the identifier by querying the network directory, communicate a data record request associated with the network identity to the ledger database, and upon receipt of the data record request, the ledger database is configured to: identify a verified data record associated with the network identity, the verified data record having been verified by submission to a computer system associated with a trusted authority, and communicate the verified data record to the verification function, wherein the verification function is further configured to: determine if the verified data record matches the data assertion, and communicate a message to the external computer system indicating the data has been verified if the verified data record matches the data assertion and communicate a message indicating the data has not been verified to the external computer system if the verified data record does not match with the data assertion.

## Description

### Technical Field

The present invention relates to systems and techniques for verifying data.

### Background

In many settings, it is necessary to verify the accuracy of otherwise unverified data. For example, when a party, such as a person or business, applies for a financial product such as a credit card or financial loan, it is often necessary for the party to provide otherwise unverified information, such as declarations about employment status and salary amount for a person; or such as financial statements, accounts receivable ledger or asset value for a business.

In such examples, before providing the financial product, the credit provider will normally perform a "credit check" (where information about the credit history of the party applying for credit is evaluated) and some form of credentials validation where the details provided by the party applying for credit are assessed to determine if they are accurate.

In many cases, to verify such credentials, a party applying for credit is required to submit copies of document-based evidence. For example, for a person, electronic scanned copies of a number of successive payslips might be provided by email or a web interface to prove that a claim about income is genuine. For a business, electronic scanned copies of bank statements, tax returns and financial statements might be provided, again by email or via a web interface. In some cases, these documents may be certified by a suitable individual, for example a person with legal or financial standing such as a lawyer or accountant.

Typically, such document-based evidence, even if submitted electronically, must be manually reviewed to determine whether the information which it purportedly substantiates is accurate. This is often done by submitting a request to verify the information to another party. Where a party is an individual applying for credit, this may be the employer of the individual and the request is to confirm that a claim made about employment status and salary amount is accurate. Where a party is a business individual applying for credit, this may be the bank of the business and the request is to confirm that a claim made about the financial status of the business is accurate.

Because much of this process is performed by manual review, it can be slow, prone to human error and inconsistencies. Moreover, there is a high risk of data being manipulated if, for example, there is an intent to fraudulently obtain credit. Automating this process could make it faster, less error prone and more consistent. However, a number of technical constraints make automating the process of verifying data in such settings difficult.

To verify unverified data, the unverified data needs to be compared with a verified version of the data. However, many computer systems that generate and hold data records of verified data, particularly financial data (for example payroll systems or other accounting systems) would have to undergo substantial modification to automate the process of verifying unverified data. For example, substantial additional functionality would have to be added to a conventional payroll system to enable it to automatically confirm whether or not scanned copies of payslips provided to a credit provider by an employee matched payslips issued to that employee.

Furthermore, for data security reasons, access to the internal data and processes of computer systems, such as payroll systems, is tightly controlled and would not typically be granted to the computer systems of an external party such as a credit provider. However, without this access, it would be difficult or impossible for the external party seeking to verify unverified data to guarantee that the comparison of the unverified data with the verified version of the data has been performed with the required technical tolerances.

It is an aim of embodiments of the invention to address this.

### Summary of the Invention

In accordance with a first aspect of the invention, there is provided a system for verifying data associated with a party requesting a product or service, said system comprising a verification function, a ledger database and a network directory comprising a plurality of network identity data records associated with a plurality of known parties, said verification function configured to: receive from an external computer system a data verification request message comprising an identifier identifying a requesting party and a data assertion indicative of data asserted to be accurate by the requesting party; determine a network identity associated with the identifier by querying the network directory, communicate a data record request associated with the network identity to the ledger database, and upon receipt of the data record request, the ledger database is configured to: identify a verified data record associated with the network identity, the verified data record having been verified by submission to a computer system associated with a trusted authority, and communicate the verified data record to the verification function, wherein the verification function is further configured to: determine if the verified data record matches the data assertion, and communicate a message to the external computer system indicating the data has been verified if the verified data record matches the data assertion and communicate a message indicating the data has not been verified to the external computer system if the verified data record does not match with the data assertion.

Optionally, the data assertion comprises a first numerical value associated with an asserted value by the requesting party and the verified data record comprises a second numerical value associated with a verified value associated with the requesting party.

Optionally, the asserted value is a salary value.

Optionally, the verification function is configured to determine that the verified data record matches the data assertion if the first numerical value and second numerical value are the same within a predetermined tolerance.

Optionally, the predetermined tolerance is a predetermined percentage value.

Optionally, the ledger database is configured to store a plurality of verified data records associated with a plurality of network identities as immutable data records.

Optionally, the ledger database is configured to receive verified personal data records from the data processing service.

Optionally, the data processing service is an accounting service.

Optionally, the accounting service is a payroll service.

Optionally, the trusted authority is associated with a tax authority.

Optionally, the system further comprises a relationship database, and wherein the data assertion further comprises: asserted relationship data corresponding to a relationship that the requesting party asserts exists between the requesting party and a further party, and further identifier data identifying the further party, wherein the verification function is further configured to: determine a further network identity associated with the further identifier by querying the network directory, determine a relationship status between the requesting party and the further party by querying a relationship database using the network identity and further network identity, said relationship database storing a plurality of data records indicative of relationships between a plurality of parties, determine if the asserted relationship data corresponds to the relationship status determined from the relationship database, and communicate the message indicating the data has been verified to the external computer system only if the asserted relationship data corresponds to the relationship status.

Optionally, the relationship that the requesting party asserts exists between the requesting party and a further party is an employee/employer relationship and the relationship status determined by querying a relationship database is an employment relationship between the requesting party and the further party.

Optionally, the external computer system is a credit check provider computer system.

In accordance with a second aspect of the invention, there is provided a data verification system, said system comprising a verification function and a ledger database, said verification function configured to: receive from an external computer system a data verification request message comprising an identifier identifying a requesting party and a data assertion indicative of data asserted to be accurate by the requesting party; determine a network identity associated with the identifier by querying a network directory, communicate a data record request associated with the network identity to the ledger database, and upon receipt of the data record request, the ledger database is configured to: identify a verified data record associated with the network identity, the verified data record having been previously verified by submission to a computer system associated with a trusted authority and communicate the data record to the verification function, wherein the verification function is further configured to: determine if the verified data record matches the data assertion, and communicate a message to the external computer system indicating the data has been verified if the verified data record matches the data assertion and communicate a message to the external computer system indicating the data has not been verified if the verified data record does not match with the data assertion.

In accordance with a third aspect of the invention, there is provided a method for verifying unverified data, said method comprising: receiving from an external computer system a data verification request message comprising an identifier identifying a requesting party and a data assertion indicative of data asserted to be accurate by the requesting party; determining a network identity associated with the identifier by querying a network directory, communicating a data record request associated with the network identity to a ledger database, identifying a verified data record associated with the network identity stored in the ledger database, the verified data record having been verified by submission to a computer system associated with a trusted authority and determining if the verified data record matches the data assertion, and communicating a message to the external computer system indicating the data has been verified if the verified data record matches the data assertion and communicating a message to the external computer system indicating the data has not been verified if the verified data record does not match with the data assertion.

In accordance with a fourth aspect of the invention, there is provided a computer program which when run on a computing device controls the computing device to perform a method in accordance with the third aspect of the invention.

When seeking to provide an improved technique for automating the process of verifying unverified data, the present invention takes technical advantage of the fact that data is inherently verified once it is submitted to a computer system associated with a trusted authority. As will be understood, trusted authorities are parties, for example organisations or individuals, that are considered to be inherently trustworthy, for example government entities and agencies (such as a tax authorities and official corporation registries), financial institutions such as banks, professional organisations such as accountants or auditors or professionally regulated individuals, for example individual accountants or lawyers. Information provided by such parties is considered to be correct, accurate and not requiring further validation. Moreover, in many cases there is typically a strong disincentive to provide false or inaccurate information to a trusted authority. Typically, such disincentives are in the form of legal or financial penalties.

To take advantage of this, systems arranged in accordance with examples of the invention include a shared ledger that stores data that has previously been submitted to a trusted authority. This data is therefore inherently verified (by virtue of its previous submission to a trusted authority computer system) and can be considered immutable, because of its storage in a ledger database. This architecture therefore provides an intrinsically reliable record of the verified data.

Consequently, this architecture enables data asserted to be accurate by a requesting party to be verified to be correct or false simply by making a data query to this central ledger. Advantageously, this means an automated system for verifying unverified data can be implemented simply and without the need of substantial modifications to existing systems; all that is required is a shared ledger that stores data submitted to a trusted authority. Moreover, as described above, because the data stored in the shared ledger is an intrinsically reliable record of the verified data, a third party (for example a credit provider) can be confident that the data with which the unverified data will be compared is accurate.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a schematic diagram depicting an arrangement of computer systems in which a data verification system arranged in accordance with certain embodiments of the invention is deployed;
Figure 2 provides a diagram depicting a sequence of data exchange and data processing when a data verification system arranged in accordance with certain embodiments of the invention undertakes a data verification process;
Figure 3 provides a diagram depicting a verification process in accordance with certain embodiments of the invention;
Figure 4 provides a schematic diagram depicting an arrangement of computer systems in which a data verification system arranged in accordance with certain further embodiments of the invention is deployed;
Figure 5 provides a diagram depicting a sequence of data exchange and data processing when a data verification system arranged in accordance with certain further embodiments of the invention undertakes a data verification process;
Figure 6 provides a diagram depicting a verification process in accordance with certain further embodiments of the invention, and
Figure 7 provides a flow chart depicting a method of verifying data associated with a party requesting a product or service in accordance with certain embodiments of the invention.

### Detailed Description

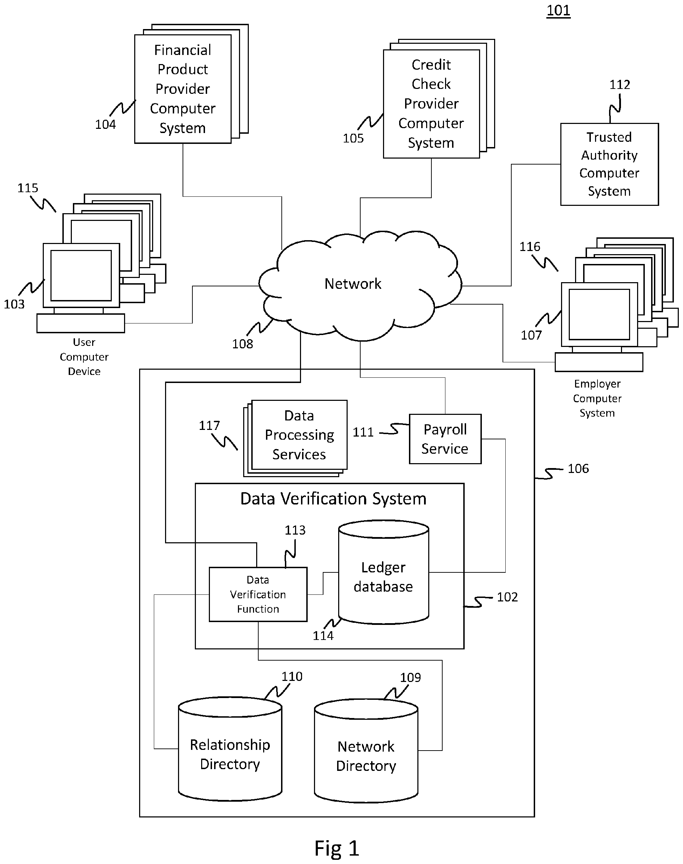

Figure 1 provides a schematic diagram depicting an arrangement of computer systems 101 in which a data verification system 102 arranged in accordance with certain embodiments of the invention is deployed. The data verification system 102 for verifying data associated with a party requesting a product or service.

The arrangement of computer systems 101 comprises a user computer device 103 a financial product provider computer system 104 and a credit check provider computer system 105. The arrangement of computer systems 101 further comprises an accounting software services computer network 106 and an employer computer system 107.

The user computer device 103, financial product provider computer system 104, credit check provider computer system 105, accounting software services computer network 106 and employer computer system 107 are all communicatively connected to a data network 108 via which data can be sent and received.

The accounting software services computer network 106 incorporates the data verification system 102 and further comprises a network directory 109, a relationship directory 110, and a payroll service 111.

The arrangement of computer systems 101 further comprises a trusted authority computer system 112 which is also communicatively connected to the data network 108.

It will be understood that the user computer device 103, financial product provider computer system 104, credit check provider computer system 105, employer computer system 107, and the trusted authority computer system 112 are external to the accounting software services computer network 106 but can communicate with the accounting software services computer network 106 via the data network 108.

In a typical example of this embodiment, the user computer device 103 is associated with a user who is applying for a financial product such as a financial loan and the financial product provider computer system 104 is associated with a financial product provider from whom the user of the user computer device 103 is seeking the loan.

The credit check provider computer system 105 is associated with a credit check provider who provides credit check services to the financial product provider. The employer computer system 107 is associated with an employer organisation that employs the user of the user computer device 103.

As shown in Figure 1, in typical examples of this embodiment, the user computer device 103 is one of many such user computer devices 115 communicatively similarly connected to the data network 108. Similarly, the employer computer system 107 is typically one of many similar computer systems 116 associated with organisations similarly connected to the data network 108 and the financial product provider computer system 104 and credit check provider computer system 105 are one of several such computer systems connected to the data network 108.

The accounting software services computer network 106 is associated with a provider of accounting data processing services, who, in this example, provides payroll functions to the employer organisation associated with the employer computer system 107. The payroll service 111 is a software data processing service implemented within the accounting software services computer network 106 that provides these payroll functions. The payroll service 111 is accessed by the employer computer system 107 via the data network 108. Typically, the payroll service 111 is one of a plurality of similar accounting data processing services 117 provided by the accounting software services computer network 106 to the employer computer system 107 and similar computer systems 116.

The network directory 109 is a database of data records of known parties to whom the accounting services provider provides services (for example the organisations associated with the employer computer system 107 and the organisations associated with the similar computer systems 116) and parties who are associated with the parties to whom the accounting services provider provides services (for example employees, suppliers, customers etc of the organisations associated with the employer computer system 107 and the organisations associated with the similar computer systems 116).

The network directory 109 contains a plurality of data records which identify these parties which are referred to as "network identities".

The relationship directory 110 is a database which stores data specifying the nature of the relationships between the parties identified by network identities in the network directory 109, for example, employer, employee, supplier, customer etc.

The network directory 109 therefore contains a data record associated with the employer organisation associated with the employer computer system 107 and the user associated with the user computer device 103. The relationship directory 110 contains a data record specifying the employee/employer relationship between the employer organisation and the user.

The trusted authority computer system 112 is a computer system associated with a "trusted authority". A "trusted authority" is a party, typically an organisation, who is considered to be inherently trustworthy and therefore any information provided by that party is considered accurate and correct and not requiring of further validation. In the example described with reference to Figure 1, the trusted authority is a tax authority. In the UK this tax authority is HMRC (His Majesty's Revenue and Customs).

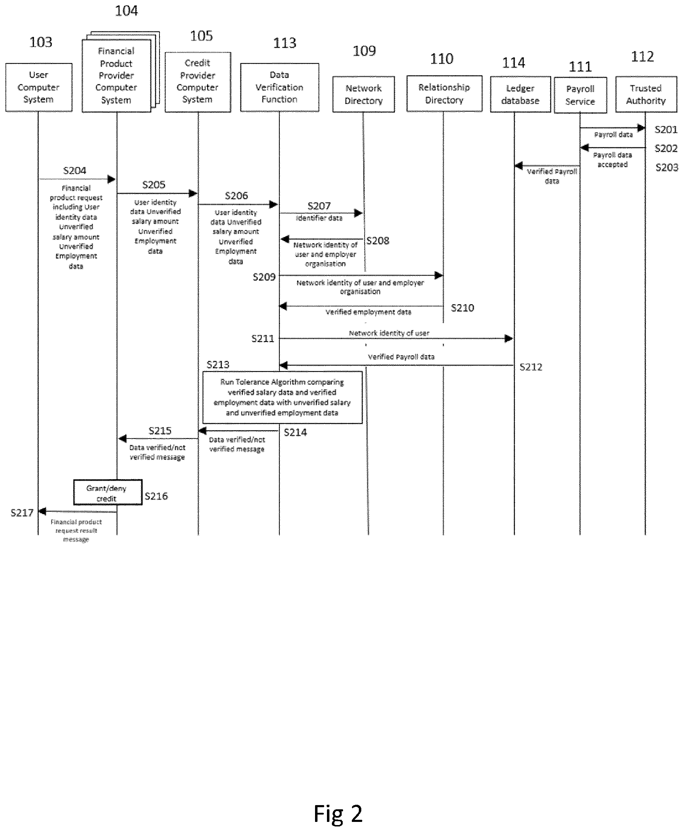

As can be seen in Figure 1, the data verification system 102 comprises a data verification function 113 and a ledger database 114. Operation of these components of the data verification system 102 is now explained further with reference to Figure 2.

Figure 2 provides a diagram depicting the sequence of data exchange and data processing when the data verification system 102 undertakes a data verification process.

As described above, the accounting software services computer network 106 provides payroll functions to the employer organisation via the payroll service 111. These payroll functions provided by the payroll service 111 include the generation of payroll data for submission to a tax authority (commonly referred to as "payslips").

At a first step S201 payroll data associated with the employment of the user of the user computer device 103 by the employer organisation is submitted to the trusted authority computer system 112. In a typical example, this data is stored by the trusted authority to keep a record of the tax liability of the user of the user computer device 103.

As will be understood, the payroll data is typically sent from the payroll service 111 as part of a batch data transfer containing payroll data from many other employees.

On receipt of the payroll data, at a second step S202, the trusted authority computer system 112 communicates a "payroll data accepted" message to the payroll service 111. This message authenticates the fact that the payroll data has been legitimately submitted to the tax authority and means that the user (and often the employer organisation) are now liable to be taxed based on the information contained in the payroll data. Employers and employees will not wish to overstate the amount that the payroll data indicates an employee has been paid because to do so will unnecessarily increase the tax liability of the employee (and in many cases the employer). Accordingly, the "payroll data accepted" message inherently verifies that the amount the payroll data indicates that the user has been paid by the employer organisation is accurate.

On receipt of the "payroll data accepted" message, at a third step S203, the payroll service 111 is adapted to communicate a "verified payroll data" message to the ledger database 114.

The "verified payroll data" message contains payroll data that the trusted authority computer system 112 has verified it has been received to the ledger database 114.

The ledger database 114 stores this verified payroll data as the latest data record in a chain of similar data records. The data record contains a cryptographic hash of one or more previous records thereby producing an irrefutable record of the payroll data submission.

Separately, if the user of the user computer device 103 wishes to apply for a financial product provided by the financial product provider associated with the financial product provider computer system 104, using suitable software on the user computer device 103 (for example by completing a web form served from a website provided by the financial product provider), at a fourth step S204, financial product request data is communicated from the user computer device 103 to the financial product provider computer system 104.

The financial product request data includes identifier data identifying the requesting party (i.e., the user), for example a name and possibly further identifying information such as a postal address and/or a social security identifier (in the UK this might be a "National Insurance" number) and unverified data asserted to be accurate by the user (a data assertion).

The unverified data typically includes an unverified salary amount data indicative of a claimed salary of the user (e.g., in the form of a numerical value), and employment details data, for example unverified employer identifier data identifying an employer organisation by whom the user claims they are employed (i.e., asserted relationship data).

Upon receipt of the financial product request data, at a fifth step S205, software running on the financial product provider computer system 104 communicates a data check request message to the credit check provider computer system 105. The data check request message comprises the identifier data and the unverified data.

In typical examples, this data check request message is communicated as part of a wider credit check process whereby the financial product provider requests the credit check provider provide a "credit score" associated with the credit history of the user to determine if user's credit history should prevent or permit the financial product provider supplying the financial product to the user.

On receipt of the data check request message from the financial product provider computer system 104, at a sixth step S206, software running on the credit check provider computer system 105 is configured to generate an employment data verification request message comprising the identifier data and the unverified data received from the financial product provider computer system 104, and to communicate this to the data verification function 113 of the data verification system 102.

At a seventh step S207, the data verification function 113 communicates the user identifier data received in the employment data verification request message to the network directory 109 along with the employer identifier data identifying the employer organisation by whom the user claims they are employed.

Searching functionality associated with the network directory 109 attempts to match this user identifier data with a network identity for the user of the user computer device 103 stored in the network directory 109 and attempts to match the employer identifier data with a network identity of the employer organisation associated with the employer computer system 107. If such network identities are identified, they are returned to the data verification function 113 at an eighth step S208.

That is, the verification function 113 queries the network directory 109 to determine the network identity of the user of the user computer device 103 and the network identity of the employer organisation associated with the employer computer system 107.

At a ninth step S209, the data verification function 113 queries the relationship directory 110 to determine if it contains relationship data consistent with the employment details data, that is indicative of an employer/employee relationship between the employer organisation and the user.

That is, the verification function 113 determines a relationship status between the user of the user computer device 103 and the organisation associated with the employer computer system 107. The verification function 113 does this by querying the relationship directory 110 using the network identity of the user of the user computer device 103 and the network identity of the employer organisation associated with the employer computer system 107. Matching functionality associated with the relationship directory 110 determines if the asserted relationship data corresponds to the relationship status determined from the relationship directory 110.

At a tenth step, S210, if this is the case, the relationship directory 110 returns verified employment details data to the data verification function 113.

At an eleventh step, S211, the data verification function 113 queries the network identity of the user to the ledger database 114 by sending a data record request associated with the network identity of the user to the ledger database 114. At a twelfth step S212, responsive to the data record request, the ledger database 114 identifies one or more verified payroll data records stored in the ledger database 114 associated with the network identity of the user (the verified data records having been verified by virtue of having been submitted to the trusted authority computer system 112) then returns the one or more verified payroll data records to the data verification function 113. The one or more verified payroll data records include verified salary amount data (e.g., in the form of a numerical value) indicative of the amount of salary that has been declared to the trusted authority.

On receipt of this data, at a thirteenth step S213, the data verification function 113 is configured to perform a verification process in which the unverified data asserted to be accurate by the user (as a data assertion) is analysed.

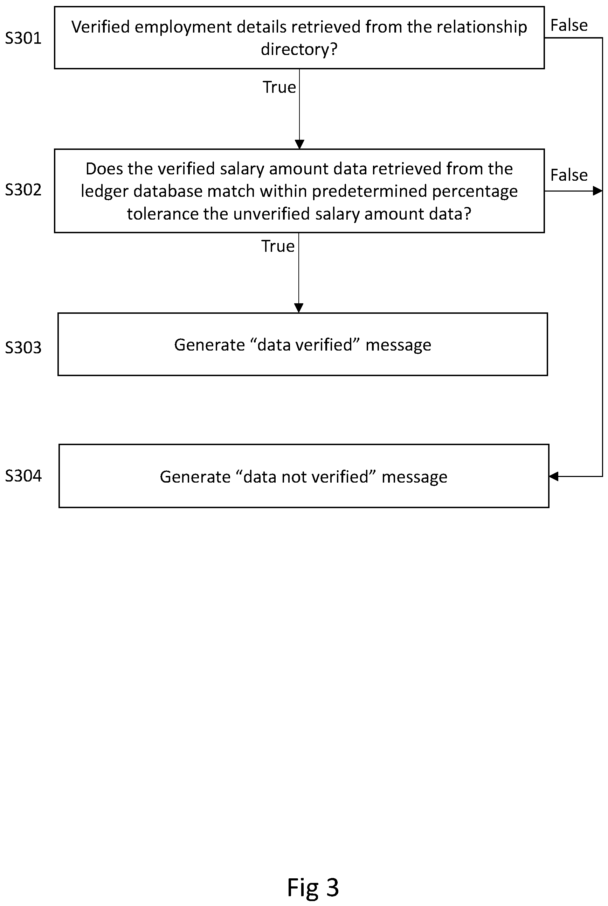

An example of the steps associated with the verification process is shown in Figure 3.

At a first step S301, the employment verification function determines if verified employment details were retrieved from the relationship directory in accordance with steps S209 and S210 described above.

If this is true, the verification process proceeds to a second step S302 where the employment verification function compares the unverified salary amount data provided by the user of the user computer device 103 with the verified salary amount data retrieved from the ledger database 114.

If the unverified salary amount data and the verified salary amount data match within a predetermined tolerance, for example a predetermined percentage tolerance of +/- 10%, then the verification process proceeds to a third step S303 in which a "data verified" message is generated.

On the other hand, if at the first step S301 the employment verification function determines that verified employment details were not successfully retrieved from the relationship directory, or, if at the second step S302 the employment verification function determines that the unverified salary amount data and the verified salary do not match within the predetermined tolerance, then the verification process proceeds to a fourth step S304 in which a "data not verified message" is generated.

Returning to Figure 2, at a fourteenth step S214, the "data verified" message or the "data not verified" message is communicated from the data verification function 113 to the credit check provider computer system 105.

At a fifteenth step S215, if a "data not verified" message is received, a corresponding "data not verified" message is sent to the financial product provider computer system 104. On the other hand, if a "data verified" message is received, a corresponding "data verified" message is sent to the financial product provider computer system 104.

At a sixteenth step S216, the financial product provider computer system 104 completes a financial product grant/deny process where it is determined whether or not to provide the user of the user computer device 103 with the financial product they have requested in dependence on whether a "data verified" message or a "data not verified" message was received from the credit check provider computer system 105.

If a "data verified" message is received from the credit check provider computer system 105, the financial product is granted. If a "data not verified" message is received from the credit check provider computer system 105, the financial product is denied.

At a seventeenth step S217, the outcome of the financial product grant/deny process undertaken at the sixteenth step S216 is communicated to the user computer device 103 as a financial product result message.

In the specific example described above, the unverified data that is verified with reference to the ledger database is an individual's salary paid to them by an employer and the trusted authority to whom the verified data records have been submitted is a tax authority. However, examples of the invention can be used to verify other forms of data relating to an individual that can be immutably stored in a ledger database and that can be verified by virtue of verified submissions made to a trusted authority as described above in relation to payroll data. Examples include financial information such as credit history, tax history, employment history, data relating to financial savings and investments and so on. In such examples, the trusted authority may be a financial institution such as a bank.

In the specific example described above, the relationship data that is verified with reference to the relationship database is an employee/employer relationship. However, in alternative embodiments, this can be any suitable relationship that can be verified between two parties, for example a supplier relationship, customer relationship or any other form of commercial or similar relationship.

In the example described above, the unverified data that is verified with reference to the ledger database is personal data provided by and relating to a particular individual. However, in other embodiments of the invention, the unverified data can relate to other types of parties, for example organisations.

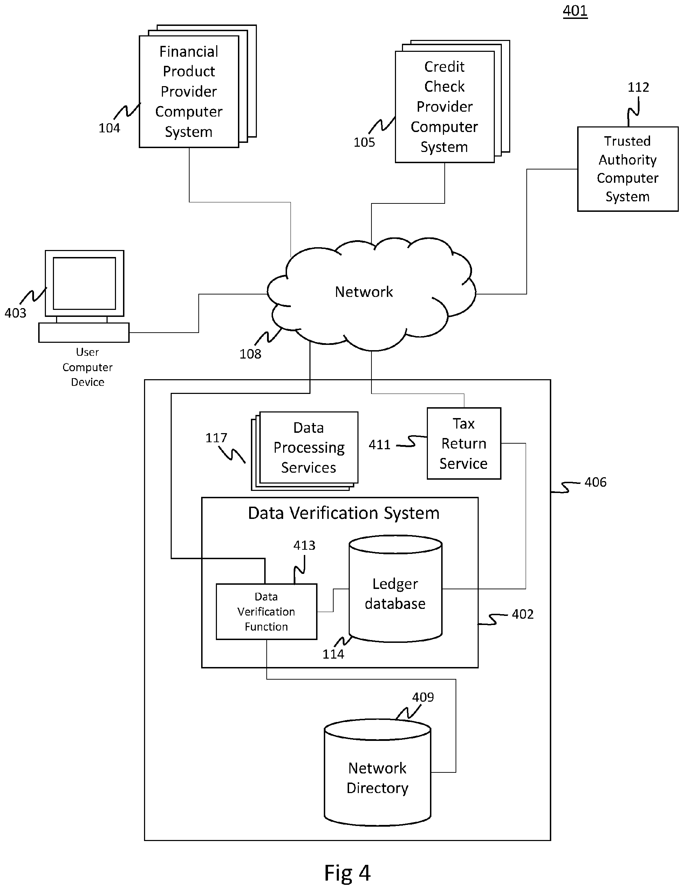

An example of such an embodiment is described further with reference to Figures 4, 5 and 6.

Figure 4 provides a schematic diagram depicting an arrangement of computer systems 401 which corresponds closely with the arrangement of computer systems 101 described with reference to Figure 1. For clarity, corresponding components have been labelled with corresponding reference numerals. Unless where otherwise described, the components of the arrangement of computer systems 401 shown in Figure 4 operate in the same or corresponding fashion to the components of the arrangement of computer systems 101 shown in Figure 1.

As can be seen from Figure 4, in keeping with the example described with reference to Figure 1, the accounting software services computer network 406 comprises a data verification system 402 and a network directory 109. However, in this example rather than a payroll service 111, the accounting software services computer network 406 comprises a tax return service 411 which is connected to the ledger database 114 of the data verification system 402, and the data network 108.

The arrangement of computer systems 401 includes a user computer device 403. In a typical example of this embodiment, the user computer device 403 is associated with a party such as a business who is applying for a financial product such as a financial loan from the financial product provider associated with the financial product provider computer system 104. The user computer device 403 accesses the accounting data processing services 117 and in particular the tax return service 411 of the accounting software services computer network 406 via the data network 108.

The tax return service 411 is a software data processing service implemented within the accounting software services computer network 406 that provides tax return functions to the party associated with the user computer device 403.

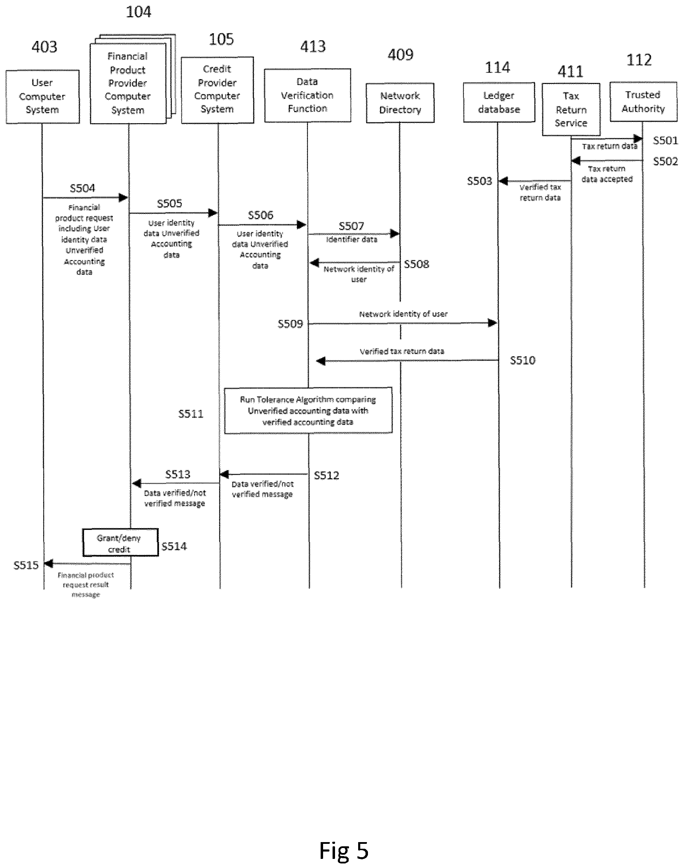

Operation of the data verification system 402 in the context of the example shown in Figure 4 is now explained further with reference to Figure 5.

Figure 5 provides a diagram depicting the sequence of data exchange and data processing when the data verification system 402 undertakes a data verification process.

The tax return functions provided by the tax return service 411 include the generation of tax return data for submission to a tax authority.

At a first step S501 tax return data associated with the commercial activities of the business associated with the user computer device 503 is submitted to the trusted authority computer system 112. In a typical example, this data is stored by the trusted authority to keep a record of the tax liability of the business.

On receipt of the tax return data, at a second step S502, the trusted authority computer system 112 communicates a "tax return data accepted" message to the tax return service 411. This message authenticates the fact that the tax return data has been legitimately submitted to the tax authority and means that the business is now liable to be taxed based on the information contained in the tax return data. Parties, such as the business associated with the tax return service 411 are under a legal obligation to submit this data accurately and therefore are incentivised to be truthful. Accordingly, the "tax return data accepted" message inherently verifies that the amount the tax return data is accurate.

On receipt of the "tax return data accepted" message, at a third step S503, the tax return service 411 is adapted to communicate a "verified tax return data" message to the ledger database 114.

The "verified tax return data" message contains tax return data that the trusted authority computer system 112 has verified it has received to the ledger database 114.

The ledger database 114 stores this verified tax return data as the latest data record in a chain of similar data records. The data record contains a cryptographic hash of one or more previous records thereby producing an irrefutable record of the payroll data submission.

Separately, if the business associated with the user computer device 403 wishes to apply for a financial product provided by the financial product provider associated with the financial product provider computer system 104, using suitable software on the user computer device 403 (for example by completing a web form served from a website provided by the financial product provider), at a fourth step S504, financial product request data is communicated from the user computer device 403 to the financial product provider computer system 104.

The financial product request data includes identifier data identifying the user, for example a business name and possibly further identifying information such as a postal address and/or a tax identifier (in the UK this might be a "VAT number") and unverified data asserted to be accurate by the user.

In this example, the unverified data may include unverified accounting data such as an unverified profit-before-tax value indicative of a claimed annual profit of the business.

Upon receipt of the financial product request data, at a fifth step S505, software running on the financial product provider computer system 104 communicates a data check request message to the credit check provider computer system 105. The data check request message comprises the identifier data and the unverified data.

On receipt of the data check request message from the financial product provider computer system 104, at a sixth step S506, software running on the credit check provider computer system 105 is configured to generate a data verification request message comprising the identifier data and the unverified data received from the financial product provider computer system 104, and to communicate this to the data verification function 413 of the data verification system 402.

At a seventh step S507, the data verification function 413 communicates the user identifier data received in the data verification request message to the network directory 409.

Searching functionality associated with the network directory 409 attempts to match this user identifier data with a network identity for the business associated with the user computer device 403 stored in the network directory 409. If such a network identity is identified, it is returned to the data verification function 413 at an eighth step S508.

At a ninth step, S509, the data verification function 413 queries the network identity of the user with the ledger database 114, responsive to which, at a tenth step S510, the ledger database 114 returns one or more verified tax return data records stored in the ledger database 114 to the data verification function 413. The one or more verified tax return data records comprise accounting data including a verified profit-before-tax value indicative of an amount of before tax profit that has been declared to the trusted authority.

On receipt of this data, at an eleventh step S511, the data verification function 413 is configured to perform a verification process in which the unverified data asserted to be accurate by the user is analysed.

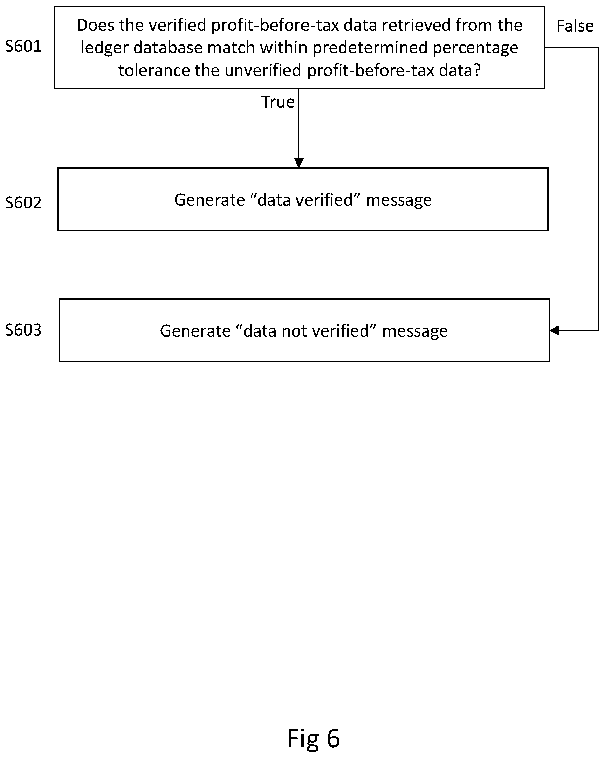

An example of the steps associated with the verification process is shown in Figure 6.

At a first step S601, the data verification function 413 compares the unverified profit-before-tax value data provided by the user of the user computer device 403 with the verified profit-before-tax value data retrieved from the ledger database 114.

If the unverified profit-before-tax value data and the verified profit-before-tax value data match within a predetermined tolerance, for example a predetermined percentage tolerance of +/-10%, then the verification process proceeds to a second step S602 in which a "data verified" message is generated.

On the other hand, if at the first step S601 the data verification function 413 determines that the unverified profit-before-tax value data and the verified profit-before-tax value data do not match within the predetermined tolerance, then the verification process proceeds to a third step S603 in which a "data not verified message" is generated.

Returning to Figure 5, at a twelfth step S512, the "data verified" message or the "data not verified" message is communicated from the data verification function 413 to the credit check provider computer system 105.

At a thirteenth step S513, if a "data not verified" message is received, a corresponding "data not verified" message is sent to the financial product provider computer system 104. On the other hand, if a "data verified" message is received, a corresponding "data verified" message is sent to the financial product provider computer system 104.

At a fourteenth step S514, the financial product provider computer system 104 completes a financial product grant/deny process where it is determined whether or not to provide the business associated with the user computer device 403 with the financial product they have requested in dependence on whether a "data verified" message or a "data not verified" message was received from the credit check provider computer system 105.

If a "data verified" message is received from the credit check provider computer system 105, the financial product is granted. If a "data not verified" is received from the credit check provider computer system 105, the financial product is denied.

At a fifteenth step S515, the outcome of the financial product grant/deny process undertaken at the fourteenth step S514 is communicated to the user computer device 403 as a financial product result message.

The components of the accounting software services computer network 106 (and corresponding features of the accounting software services computer network 406) can be implemented in any suitable way. For example, the data verification function 113 and ledger database 114 of the data verification system 102, and the network directory 109 and the relationship directory 110 can be implemented as individual separately compiled and run software modules. Alternatively, the functionality associated with these components can be implemented in one or more combined software modules.

The components of the accounting software services computer network 106 can be implemented on one or more directly interconnected computing devices (for example applications servers) which are physically located in the same location or can be implemented across multiple indirectly interconnected computing devices distributed across one or more physical locations in accordance with well-known cloud-computing techniques.

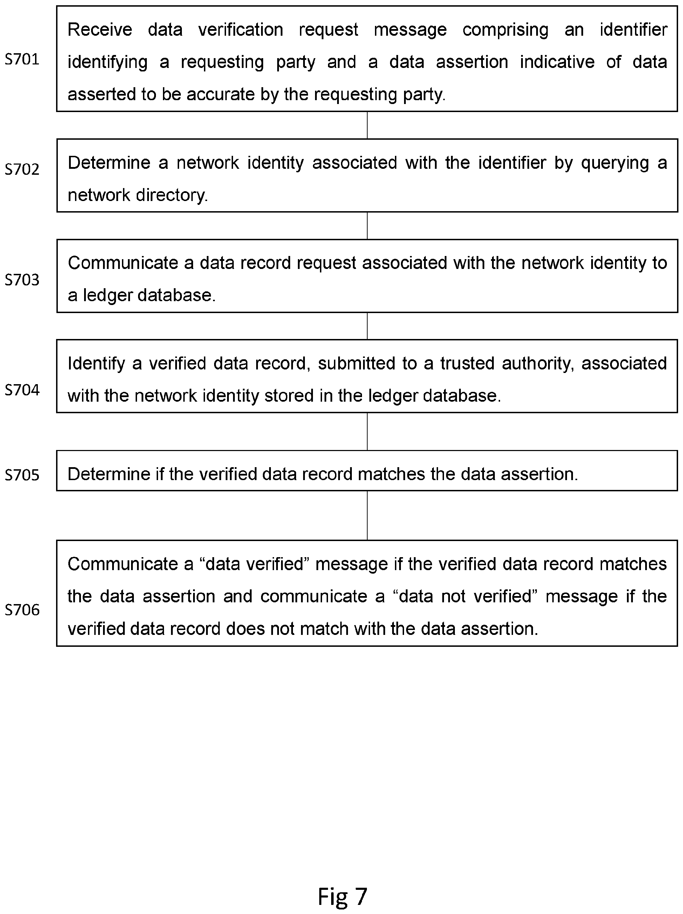

Figure 7 provides a flow chart depicting a method of verifying data associated with a party requesting a product or service in accordance with certain embodiments of the invention.

At a first step S701, a data verification request message is received from an external computer which comprises an identifier identifying a requesting party and a data assertion indicative of data asserted to be accurate by the requesting party.

At a second step S702, a network identity associated with the identifier is determined by querying a network directory.

At a third step S703, a data record request associated with the network identity is communicated to a ledger database.

At a fourth step S704, a verified data record, submitted to a trusted authority, associated with the network identity stored in the ledger database is identified.

At a fifth step S705, it is determined if the verified data record matches the data assertion.

At a sixth step S706, a "data verified" message is communicated to the external computer system if the verified data record matches the data assertion and a "data not verified" message is communicated to the external computer system if the verified personal data record does not match with the data assertion.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A system for verifying data associated with a party requesting a product or service, said system comprising a verification function, a ledger database and a network directory comprising a plurality of network identity data records associated with a plurality of known parties, said verification function configured to:
receive from an external computer system a data verification request message comprising an identifier identifying a requesting party and a data assertion indicative of data asserted to be accurate by the requesting party;
determine a network identity associated with the identifier by querying the network directory,
communicate a data record request associated with the network identity to the ledger database, and
upon receipt of the data record request, the ledger database is configured to:
identify a verified data record associated with the network identity, the verified data record having been verified by submission to a computer system associated with a trusted authority, and
communicate the verified data record to the verification function, wherein the verification function is further configured to:
determine if the verified data record matches the data assertion, and
communicate a message to the external computer system indicating the data has been verified if the verified data record matches the data assertion and communicate a message indicating the data has not been verified to the external computer system if the verified data record does not match with the data assertion.

2. A system according to claim 1, wherein the data assertion comprises a first numerical value associated with an asserted value by the requesting party and the verified data record comprises a second numerical value associated with a verified value associated with the requesting party.

3. A system according to claim 2, wherein the asserted value is a salary value.

4. A system according to claim 2 or 3, wherein the verification function is configured to determine that the verified data record matches the data assertion if the first numerical value and second numerical value are the same within a predetermined tolerance.

5. A system according to claim 4, wherein the predetermined tolerance is a predetermined percentage value.

6. A system according to any previous claim, wherein the ledger database is configured to store a plurality of verified data records associated with a plurality of network identities as immutable data records.

7. A system according to claim 6, further comprising a data processing service, wherein the ledger database is configured to receive verified personal data records from the data processing service.

8. A system according to claim 7, wherein the data processing service is an accounting service.

9. A system according to claim 8, wherein the accounting service is a payroll service.

10. A system according to any previous claim, wherein the trusted authority is associated with a tax authority.

11. A system according to any previous claim, further comprising a relationship database, and wherein the data assertion further comprises: asserted relationship data corresponding to a relationship that the requesting party asserts exists between the requesting party and a further party, and further identifier data identifying the further party, wherein the verification function is further configured to:
determine a further network identity associated with the further identifier by querying the network directory,
determine a relationship status between the requesting party and the further party by querying a relationship database using the network identity and further network identity, said relationship database storing a plurality of data records indicative of relationships between a plurality of parties,
determine if the asserted relationship data corresponds to the relationship status determined from the relationship database, and
communicate the message indicating the data has been verified to the external computer system only if the asserted relationship data corresponds to the relationship status.

12. A system according to claim 11, wherein the relationship that the requesting party asserts exists between the requesting party and a further party is an employee/employer relationship and the relationship status determined by querying a relationship database is an employment relationship between the requesting party and the further party.

13. A system according to any previous claim, wherein the external computer system is a credit check provider computer system.

14. A data verification system, said system comprising a verification function and a ledger database, said verification function configured to:
receive from an external computer system a data verification request message comprising an identifier identifying a requesting party and a data assertion indicative of data asserted to be accurate by the requesting party;
determine a network identity associated with the identifier by querying a network directory,
communicate a data record request associated with the network identity to the ledger database, and
upon receipt of the data record request, the ledger database is configured to:
identify a verified data record associated with the network identity, the verified data record having been previously verified by submission to a computer system associated with a trusted authority and
communicate the data record to the verification function, wherein the verification function is further configured to:
determine if the verified data record matches the data assertion, and
communicate a message to the external computer system indicating the data has been verified if the verified data record matches the data assertion and communicate a message to the external computer system indicating the data has not been verified if the verified data record does not match with the data assertion.

15. A method for verifying unverified data, said method comprising:
receiving from an external computer system a data verification request message comprising an identifier identifying a requesting party and a data assertion indicative of data asserted to be accurate by the requesting party;
determining a network identity associated with the identifier by querying a network directory,
communicating a data record request associated with the network identity to a ledger database,
identifying a verified data record associated with the network identity stored in the ledger database, the verified data record having been verified by submission to a computer system associated with a trusted authority and
determining if the verified data record matches the data assertion, and
communicating a message to the external computer system indicating the data has been verified if the verified data record matches the data assertion and communicating a message to the external computer system indicating the data has not been verified if the verified data record does not match with the data assertion.

16. A computer program which when run on a computing device controls the computing device to perform a method according to claim 15.
